# EUROPÄISCHE PATENTSCHRIFT

(11) **EP 1 202 093 B1**
(45) Veröffentlichungstag und Bekanntmachung des Hinweises auf die Patenterteilung: **19.11.2008**
(21) Anmeldenummer: 01124726.9
(22) Anmeldetag: 17.10.2001
(51) Int. Cl.: G02B 6/36

(54) **Anschlussklemme für mindestens einen Lichtwellenleiter**
Connection terminal for at least one optical waveguide
Borne de connexion pour au moins un guide d'onde optique

(30) Priorität: 24.10.2000 DE 10052812
(43) Veröffentlichungstag der Anmeldung: 02.05.2002
(73) Patentinhaber: PHOENIX CONTACT GmbH & Co. Kg, 32825 Blomberg (DE)
(72) Erfinder: Kathmann, Ansgar, Dipl.-Ing., 37671 Höxter (DE); Nordhoff, Andreas, Dipl.-Ing., 32805 Horn-Bad Meinberg (DE); Pape, Andreas, Dipl.-Phys., 33034 Brakel (DE); Reinicke, Bernd, 32839 Steinheim (DE)
(74) Vertreter: Gesthuysen, von Rohr & Eggert

(56) Entgegenhaltungen:
- EP-A- 0 899 818
- DE-A- 2 706 482
- DE-A- 4 429 514
- DE-A- 19 626 080
- DE-C- 19 831 851
- US-A- 4 311 359
- US-A- 4 838 641

## Beschreibung

Die Erfindung betrifft eine Anschlußklemme für mindestens einen Lichtwellenleiter, mit einem mindestens eine Öffnung aufweisenden Gehäuse, mit einem in dem Gehäuse angeordneten, eine Kontaktfläche aufweisenden Gegenelement und mit mindestens einer in dem Gehäuse angeordneten Zugentlastung, wobei im Endzustand die vordere Stirnfläche des Lichtwellenleiters mit der Kontaktfläche des Gegenelements zusammenwirkt und die Zugentlastung ein unbeabsichtigtes Entfernen der Stirnfläche des Lichtwellenleiters von der Kontaktfläche des Gegenelements verhindert.

Bei dem Gegenelement handelt es sich entweder um ein optoelektronisches Bauelement oder um einen zweiten Lichtwellenleiter. Das optoelektronische Bauelement enthält dabei zumindest einen Sender oder Empfänger, beispielsweise eine Laser- oder Leuchtdiode bzw. eine Photodiode. Darüber hinaus kann das optoelektronische Bauelement jedoch auch weitere elektrische bzw. elektronische Bauteile aufweisen. Handelt es sich bei dem Gegenelement um ein optoelektronisches Bauelement, so wird in der Regel mit Hilfe der Anschlußklemme genau ein Lichtwellenleiter an das optoelektronische Bauelement angeschlossen, so daß in dem Gehäuse auch nur eine Öffnung zum Einschieben des Lichtwellenleiters vorgesehen ist. Selbstverständlich ist es jedoch auch möglich, mehrere Lichtwellenleiter parallel an ein optoelektronisches Bauelement oder an mehrere parallel angeordnete optoelektronische Bauelemente anzuschließen, so daß dann das Gehäuse der Anschlußklemme mehrere Öffnungen aufweist. Die Kontaktfläche eines optoelektronischen Bauelements wird dabei in der Regel durch eine vor dem Sender oder Empfänger angeordnete Linse gebildet. Handelt es sich bei dem Gegenelement dagegen um einen zweiten Lichtwellenleiter, so weist das Gehäuse der Anschlußklemme in der Regel zwei gegenüberliegende Öffnungen zum Einschieben der beiden miteinander zu verbindenden Lichtwellenleiter auf. Selbstverständlich können auch hier eine Mehrzahl von Lichtwellenleiter miteinander verbunden werden, so daß dann das Gehäuse auch eine entsprechende Vielzahl von Öffnungen aufweist. Bei einem zweiten Lichtwellenleiter als Gegenelement ist dann die Kontaktfläche die Stirnfläche des zweiten Lichtwellenleiters.

Bei einem Lichtwellenleiter handelt es sich um ein zum Lichttransport geeignetes optisches Bauelement, welches häufig aus einer Vielzahl, im Verhältnis zu ihrer Länge sehr dünner, zu einem Bündel zusammengefaßter einzelner Glasfasern oder Kunststoffasern besteht; unter einem Lichtwellenleiter soll im folgenden jedoch auch ein solcher mit einer Einzelfaser verstanden werden. Die einzelnen Glasfasern oder Kunststoffasern sind dabei in der Regel von einer Kunststoffummantelung umgeben. Der Lichttransport in axialer Richtung durch jede Einzelfaser des Bündels erfolgt durch Totalreflektion an den Wandungen der Faserkerne. Durch die im Vergleich zu elektrischen Signalen wesentlich höhere Trägerfrequenz des Lichtes können größere Datenmengen in gleicher Zeit bzw. gleiche Datenmengen in kürzerer Zeit übertragen werden als mit herkömmlichen Koaxialkabeln. Aufgrund der Weiterentwicklung sowohl der Sende- und Empfangseinrichtungen als auch der Lichtwellenleiter sind die Verluste bei der Übertragung von Signalen über Lichtwellenleiter immer weiter herabgesetzt worden. Somit hat sich auch die Verwendung von Lichtwellenleitern für die Übertragung von Signalen in den letzten Jahren stark erhöht. Die Verbindung von Lichtwellenleiter mit optoelektronischen Bauelementen bzw. von Lichtwellenleitern untereinander ist jedoch in der Regel schwierig, da bei ungenauer Kontaktierung der vorderen Stirnfläche des Lichtwellenleiters mit der Kontaktfläche des anzuschließenden optoelektronischen Bauelements bzw. mit der Stirnfläche des zweiten Lichtwellenleiters eine Verzerrung der entsprechenden Signale und/oder ein Leistungsverlust auftreten kann. Deshalb besteht eine steigende Nachfrage nach einfach zu handhabenden und schnell anschließbaren Anschlußklemmen für Lichtwellenleiter.

Aus der DE 195 12 110 A1 ist eine Anschlußklemme für einen Lichtwellenleiter bekannt, bei der eine Sende- und/oder Empfangseinrichtung in dem Gehäuse der Anschlußklemme integriert ist. Die bekannte Anschlußklemme weist dabei ein Aufzugelement auf, in welches der Lichtwellenleiter durch eine Öffnung im Gehäuse eingesteckt wird. Durch Drehen einer Schraube mit Hilfe eines Schraubendrehers erfolgt eine definierte Aufwärtsbewegung des Aufzugselements, wobei zum einen das über das Aufzugselement überstehende Ende des Lichtwellenleiters abgeschnitten wird, zum anderen eine automatische Positionierung der Stirnfläche des Lichtwellenleiters vor der Kontaktfläche des Sende- und Empfangselements erfolgt. Die bekannte Anschlußklemme bietet zwar den Vorteil einer sauberen Ablängung des Lichtwellenleiters bei gleichzeitiger Stirnflächenbearbeitung, macht jedoch durch die Drehbetätigung des Aufzugselements das Anschließen eines Lichtwellenleiters relativ mühselig und damit zeitaufwendig.

Aus der DE 198 31 851 C1 ist eine eingangs beschriebene Anschlußklemme mit einem Gehäuse bekannt, bei der im Gehäuse ein optoelektronischer Wandler und eine Käfigzugfeder angeordnet sind. Zum Anschließen des Lichtwellenleiters wird dieser in eine erste Öffnung des Gehäuses eingesteckt und gleichzeitig die Käfigzugfeder durch betätigt, daß ein Werkzeug in eine zweite Öffnung im Gehäuse eingesteckt wird. Ist der Lichtwellenleiters so weit eingeschoben, daß seine Endfläche an der Kontaktfläche des optoelektronischen Wandlers zur Anlage gelangt, wird das Werkzeug aus der zweiten Öffnung entfernt, wodurch der Lichtwellenleiter durch die Käfigzugfeder in seiner Position gehalten wird. Nachteilig bei dieser Anschlußklemme ist zum einen, daß zum Einführen des Lichtwellenleiters gleichzeitig die Käfigzugfeder betätigt werden muß, zum anderen die richtige Ausrichtung des Lichtwellenleiters auf die Kontaktfläche des optoelektronischen Wandlers nur bedingt gewährleistet ist, nämlich insbesondere davon abhängt, daß der Lichtwellenleiter gerade in die erste Öffnung eingeführt wird.

Die US 4,838,641 offenbart eine Anschlußklemme für einen Lichtwellenleiter, die ein zweiteiliges Gehäuse aus Plastik aufweist, bestehend aus einem, ein optoelektronisches Bauelement aufnehmenden inneren Teil und einem das innere Teil aufnehmenden äußeren Teil. Das innere Teil weist dabei Vorsprünge auf, die beim Aufschieben des äußeren Teils auf das innere Teil nach innen gedrückt werden. Zum Anschließen eines Lichtwellenleiters wird dieser durch eine Öffnung im äußeren Teil und eine Öffnung im inneren Teil eingesteckt und anschließend das äußere Teil auf das innere Teil aufgeschoben, wobei der Lichtwellenleiter durch die nach innen gedrückten Vorsprünge des inneren Teils festgeklemmt wird. Nachteilig ist hierbei, daß die Einführung des Lichtwellenleiters und dessen Fixierung in zwei aufeinanderfolgenden Schritten erfolgt, so daß die Gefahr besteht, daß der Lichtwellenleiter beim Fixieren seine Position verändert.

Die DE 196 26 080 A1 offenbart eine weitere Ausführungsform einer Anschlußklemme zur Befestigung eines Lichtwellenleiters an einem optoelektronischen Element einer Leiterplatte, bei der als Zugelement eine Schneidklemme in dem Gehäuse angeordnet ist, in die der Lichtwellenleiter senkrecht zu seiner Längserstreckung eingedrückt wird. Bei dieser Anschlußklemme ist somit das optoelektronische Element nicht Bestandteil der Anschlußklemme. Bei dieser Anschlußklemme ist zwar das Einführen des Lichtwellenleiters ohne weiteres Hilfsmittel möglich, eine Ausrichtung des Lichtwellenleiters auf die Kontaktfläche des optoelektrischen Elements erfolgt jedoch nicht. Es ist sogar möglich, daß im montierten Zustand der Lichtwellenleiter in axialer Richtung einen Abstand von der Kontaktfläche aufweist.

Schließlich ist aus der EP 0 899 818 A eine Anschlußklemme für elektrische Leiter bekannt, die ein Klemmengehäuse mit einer metallischen Kastenfeder und einem Betätigungsteil aufweist, wobei das Betätigungsteil aus dem Klemmengehäuse mit einem Drückerende herausragt und beweglich innerhalb der Kastenfeder angeordnet ist. Die Kastenfeder weist in einem Ausführungsbeispiel zwei seitlich federnde Schenkel auf, welche einen durch eine Leitereinführungsöffnung im Betätigungsteil eingeführten elektrischen Leiter kontaktieren.

Der vorliegenden Erfindung liegt somit die Aufgabe zugrunde, die eingangs beschriebene Anschlußklemme für mindestens einen Lichtwellenleiter dahingehend zu verbessern, daß der Anschluß des Lichtwellenleiters an das Gegenelement möglichst einfach, schnell und ohne Verwendung weiterer Hilfsmittel möglich ist, wobei ein genaues Kontaktieren der vorderen Stirnfläche des Lichtwellenleiters mit der Kontaktfläche des Gegenelements gewährleistet sein soll.

Diese Aufgabe ist erfindungsgemäß zunächst und im wesentlichen dadurch gelöst, daß die Zugentlastung als Metallteil ausgebildet ist und zwei seitlich federnde Schenkel aufweist, wobei die Enden der beiden Schenkel in Einführrichtung des Lichtwellenleiters aufeinander zu gebogen sind und die Zugentlastung durch das Einführen des Lichtwellenleiters selbständig aktivierbar ist.

Ein derartiges als Zugentlastung ausgebildetes Metallteil ist besonders einfach, beispielsweise durch Ausstanzen und anschließendes Umbiegen, herstellbar. Durch die beiden aufeinander zu gebogenen Enden der beiden Schenkel kann das Metallteil darüber hinaus die richtige Ausrichtung des Lichtwellenleiters auf die Kontaktfläche des Gegenelements unterstützen. Das Metallteil gewährleistet die Einhaltung des Endzustandes, in dem die vordere Stirnfläche des Lichtwellenleiters mit der Kontaktfläche des Gegenelements zusammenwirkt, ohne daß beim Einführen oder in der Endposition ein zusätzliches Betätigungswerkzeug notwendig ist, so daß ein einfaches und schnelles Anschließen des Lichtwellenleiters durch einfaches Einschieben des Lichtwellenleiters in die Öffnung der Anschlußklemme möglich ist.

Ist kein Lichtwellenleiter in die Anschlußklemme eingefügt, so sind die Enden der beiden Schenkel relativ eng zueinander angeordnet, wodurch der Zugang zur Kontaktfläche des Gegenelements versperrt ist. Wird nun ein Lichtwellenleiter durch die Öffnung in dem Gehäuse in die Anschlußklemme eingeführt, so trifft die vordere Stirnfläche des Lichtwellenleiters auf die Enden der beiden federnden Schenkel, wodurch diese auseinander gedrückt werden. Der Lichtwellenleiter kann dann vollständig in die Anschlußklemme eingeschoben werden. Ein unbeabsichtigtes Zurückrutschen des Lichtwellenleiters wird jedoch dadurch verhindert, daß sich die Enden der beiden Schenkel des Metallteils beim Zurückziehen des Lichtwellenleiters in dessen Kunststoffummantelung eindrücken und dadurch den Lichtwellenleiter festklemmen. Das Metallteil als Zugentlastung wird somit allein durch das Einführen des Lichtwellenleiters in die Anschlußklemme betätigt. Ein zusätzliches Betätigungswerkzeug zum Festsetzen des Lichtwellenleiters in der Anschlußklemme ist nicht erforderlich.

Da es manchmal wünschenswert ist, einen bereits an einer Anschlußklemme angeschlossenen Lichtwellenleiter wieder lösen zu können, ist gemäß einer bevorzugten Ausgestaltung der Anschlußklemme in dem Gehäuse mindestens ein Betätigungselement beweglich angeordnet, wobei das Betätigungselement aus einer ersten Stellung, in der die Enden der beiden Schenkel des Metallteils enger zusammen liegen, in eine zweite Stellung, in der die Enden der beiden Schenkel des Metallteils durch das Betätigungselement auseinandergedrückt werden, verbracht werden kann. Vorteilhafterweise ist das Betätigungselement von außerhalb des Gehäuses zugänglich, insbesondere durch das Einschieben der Spitze eines Schraubendrehers in eine Öffnung im Gehäuse betätigbar. Durch das Betätigungselement ist es somit möglich, die Enden der beiden Schenkel gegen ihre Federkraft weiter auseinander zu drücken, so daß sie den eingeschobenen Lichtwellenleiter wieder freigeben und dieser aus der Anschlußklemme herausgezogen werden kann.

Eingangs ist ausgeführt worden, daß als Gegenelement entweder ein optoelektronisches Bauelement oder ein weiterer Lichtwellenleiter verwendet werden kann. Bevorzugt wird die Anschlußklemme dabei mit einem optoelektronischen Bauelement als Gegenelement verwendet, wobei dann dem optoelektronischen Bauelement Lötstifte zur Verbindung mit einer Leiterplatte zugeordnet sind. Mit Hilfe einer derartigen Anschlußklemme, welche häufig auch als Printklemme bezeichnet wird, ist dann der Anschluß eines Lichtwellenleiters an eine Leiterplatte möglich. Über die Lötstifte erfolgt zum einen die elektrische Verbindung des optoelektronischen Bauelements mit der Leiterplatte, zum anderen auch die mechanische Verbindung der Anschlußklemme auf der Leiterplatte.

Zur Gewährleistung einer besonders sicheren mechanischen Befestigung der Anschlußklemme auf der Leiterplatte ist vorteilhafterweise auch an dem Metallteil mindestens ein Befestigungsstift zur Befestigung des Metallteils und damit zur Befestigung der Anschlußklemme auf der Leiterplatte ausgebildet. Ist der Befestigungsstift als Lötstift ausgebildet, so kann er auf der Leiterplatte mit einer Masseverbindung kontaktiert werden. Hierdurch können in vorteilhafterweise schädliche Aufladungen auf der Kunststoffummantelung des Lichtwellenleiters über das Metallteil und den Lötstift nach Masse abgeleitet werden.

Im einzelnen gibt es nun eine Vielzahl von Möglichkeiten, die erfindungsgemäße Anschlußklemme für mindestens einen Lichtwellenleiter auszugestalten. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigen
- Fig. 1: von unten, eine Ausführung einer erfindungsgemäßen Anschlußklemme mit einem Gehäuse, jedoch ohne einen Lichtwellenleiter,
- Fig. 2: von oben, eine perspektivische Darstellung eines als Zugentlastungselement ausgebildeten Metallteils mit einem eingeschobenen und an einem optoelektronischen Bauelement angeschlossenen Lichtwellenleiter,
- Fig. 3: das Metallteil aus Fig. 2 von unten und
- Fig. 4: eine perspektivische Darstellung der Anschlußklemme schräg von oben.

In den Figuren dargestellt ist jeweils nur eine Ausführungsform einer Anschlußklemme 1 für nur einen Lichtwellenleiter 2, wozu auch nur eine Öffnung 3 in einem Gehäuse 4 vorgesehen ist. Die in den Figuren dargestellte Anschlußklemme 1 dient dabei zum Anschluß des Lichtwellenleiters 2 an ein in dem Gehäuse 4 angeordnetes optoelektronisches Bauelement 5. Nicht dargestellt ist somit die ebenfalls zur Lehre der vorliegenden Erfindung gehörende Anschlußklemme zum Verbinden zweier Lichtwellenleiter, bei der das Gehäuse dann zwei an gegenüberliegenden Seiten liegende Öffnungen aufweist.

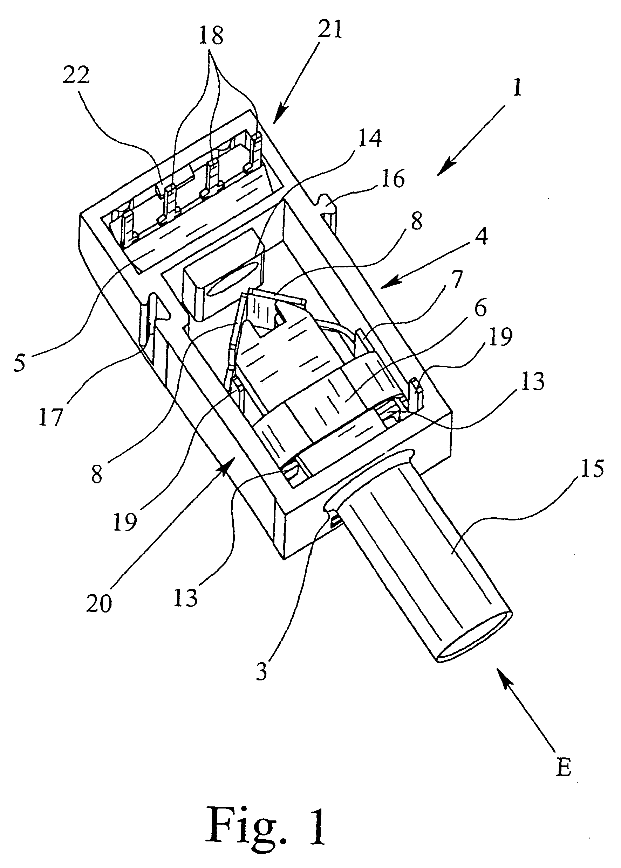

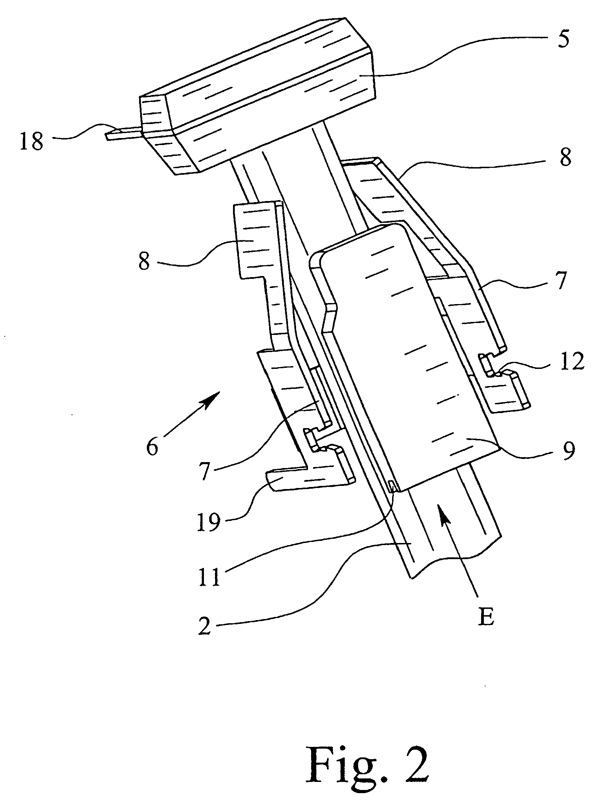

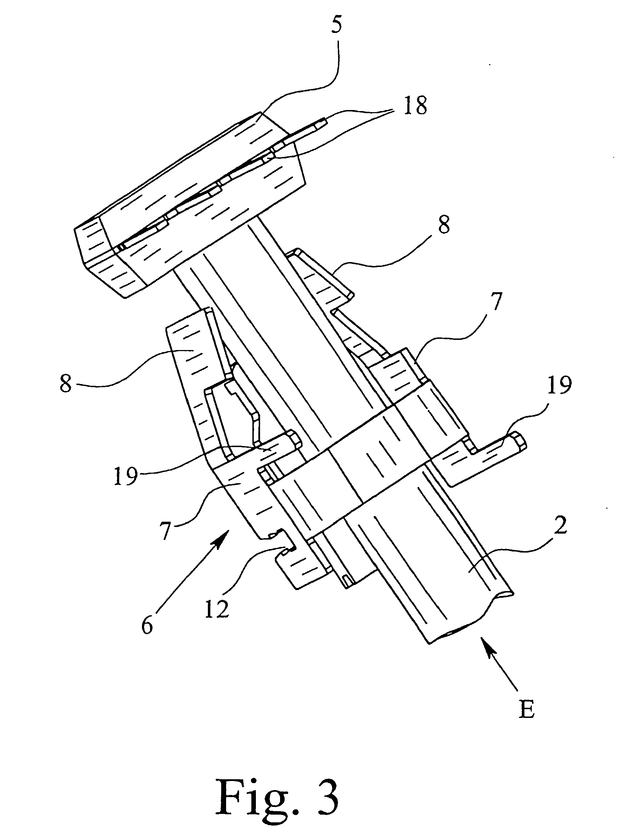

Die Fig. 2 und 3 zeigen nur einen Teil der erfindungsgemäßen Anschlußklemme 1, nämlich zunächst ein als Zugentlastung ausgebildetes Metallteil 6. Das Metallteil 6 weist zwei seitlich federnde Schenkel 7 auf, deren Enden 8 in Einführrichtung E des Lichtwellenleiters 2 aufeinanderzu gebogen sind. Bei dem dargestellten Ausführungsbeispiel verläuft die Einführrichtung E des Lichtwellenleiters 2 parallel zur Längserstreckung des Gehäuses 4 und zur Längserstreckung des Metallteils 6. Die Enden 8 der beiden Schenkel 7 sind somit in Einführrichtung E V-förmig aufeinanderzu laufend angeordnet. Ist - wie in Fig. 1 dargestellt - kein Lichtwellenleiter 2 in die Anschlußklemme 1 eingeschoben, so weisen die Enden 8 der beiden Schenkel 7 nur einen sehr geringen Abstand voneinander auf. Der Abstand der beiden Enden 8 kann dabei sogar bis auf null verringert sein, ist jedenfalls aber deutlich geringer als der Durchmesser des einzuführenden Lichtwellenleiters 2.

Wird ein Lichtwellenleiter 2 durch die Öffnung 3 in das Gehäuse 4 eingeschoben, so stößt die Stirnfläche des Lichtwellenleiters 2 auf die aufeinanderzu gebogenen Enden 8 der beiden Schenkel 7. Dadurch, daß die Schenkel 7 des Metallteils 6 seitlich federnd sind, werden die Enden 8 der Schenkel 7 beim weiteren Einführen des Lichtwellenleiters 2 auseinandergedrückt, so daß die Stirnfläche des Lichtwellenleiters 2 bis zur Kontaktfläche des optoelektronischen Bauelements 5 vorgeschoben werden kann. Aufgrund der federnden Eigenschaft der Schenkel 7 und der V-förmigen Anordnung der Enden 8 drücken sich die Enden 8 der Schenkel 7 des Metallteils 6 beim Zurückziehen des Lichtwellenleiters 2 entgegen der Einführrichtung E in die Kunststoffummantelung des Lichtwellenleiters 2 ein, wodurch ein unbeabsichtigtes Entfernen der Stirnfläche des Lichtwellenleiters 2 von der Kontaktfläche des optoelektronischen Bauelements 5 verhindert wird.

Bei der dargestellten Ausführung der erfindungsgemäßen Anschlußklemme 1 ist ein gewolltes Herausziehen des Lichtwellenleiters 2 aus der Anschlußklemme 1 jedoch dadurch möglich, daß ein Betätigungselement 9 beweglich in dem Gehäuse 4 angeordnet ist. Bei der Darstellung gemäß Fig. 2 ist das Betätigungselement 9 entgegen seiner tatsächlichen Anordnung in dem Gehäuse 4 freiliegend oberhalb des Lichtwellenleiters 2 dargestellt. Aus dieser Darstellung ist jedoch die Funktion des Betätigungselements 9 sehr gut erkennbar. In der in Fig. 2 dargestellten Position des Betätigungselements 9 relativ zum Metallteil 6 tritt das Betätigungselement 9 mit dem Metallteil 6, insbesondere mit den Enden 8 der Schenkel 7, nicht in Berührung. Wird das Betätigungselement 9 in Einführrichtung E geschoben, so werden die Enden 8 der Schenkel 7 durch das Betätigungselement 9 auseinandergedrückt und somit von der Kunststoffummantelung des Lichtwellenleiters 2 abgehoben. Der Lichtwellenleiter 2 kann dann entgegen der Einführrichtung E aus der Anschlußklemme 1 wieder herausgezogen werden.

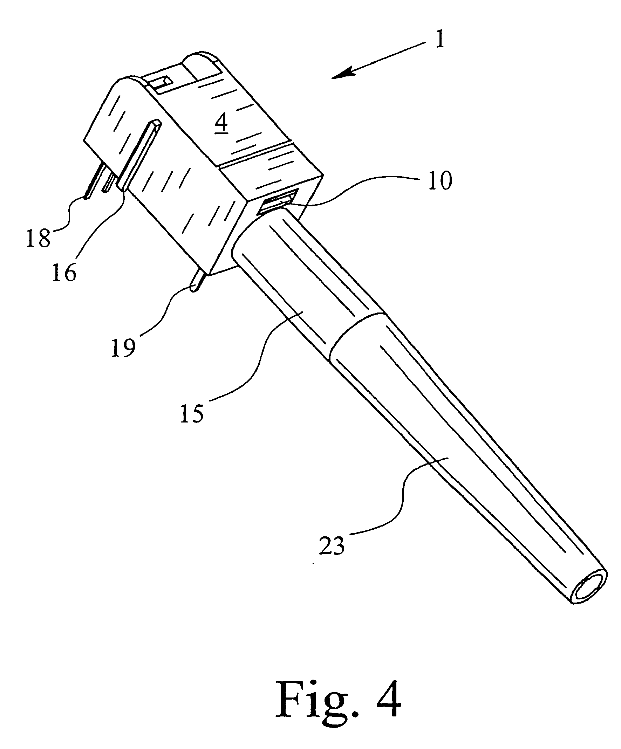

In Fig. 4 ist erkennbar, daß das Betätigungselement 9 von außerhalb des Gehäuses 4 betätigbar ist, wozu in dem Gehäuse 4 eine längliche Öffnung 10 zum Einstecken der Spitze eines Schraubendrehers vorgesehen ist. Zur Führung der Spitze des Schraubendrehers ist an der Stirnseite des Betätigungselements 9 eine Vertiefung 11 ausgebildet.

Die Schenkel 7 des Metallteils 6 weisen Rastausnehmungen 12 auf, und in dem Gehäuse 4 sind korrespondierende Rastnasen 13 ausgebildet, so daß das Metallteil 6 einfach durch Aufrasten der Rastausnehmungen 12 auf den Rastnasen 13 in dem Gehäuse 4 befestigt werden kann. Daneben ist in dem Gehäuse 4 vor der Kontaktfläche des optoelektronischen Bauelements 5 ein trichterförmiges Einführelement 14 zur axialen Ausrichtung der vorderen Stirnfläche des Lichtwellenleiters 2 mit der Kontaktfläche des optoelektronischen Bauelements 5 angeordnet. Zusätzlich wird die genaue Ausrichtung des Lichtwellenleiters 2 zur Kontaktfläche des optoelektronischen Bauelements 5 dadurch erleichtert, daß vor der Öffnung 3 des Gehäuses 4 ein rohrförmiges Ansatzelement 15 zur Führung des Lichtwellenleiters 2 angeordnet ist. Insgesamt erfolgt somit eine Führung eines anzuschließenden Lichtwellenleiters 2 durch das rohrförmige Ansatzelement 15, die Öffnung 3, die aufeinanderzu gebogenen Enden 8 der beiden Schenkel 7 und schließlich das trichterförmge Einführelement 14.

In den Fig. 1 und 4 ist erkennbar, daß das Gehäuse 4 seitlich Rastmittel, nämlich auf der einen Längsseite ein schwalbenschwanzförmiges Rastelement 16 und auf der anderen Längsseite eine dazu korrespondierende Rastausnehmung 17 aufweist. Mit Hilfe dieser Rastmittel können mehrere Gehäuse 4 zu einem Gehäuseblock zusammengesteckt werden, so daß dann insgesamt ein Anschlußklemmenblock zum Anschluß mehrerer Lichtwellenleiter 2 an mehrere optoelektronische Bauelemente 5 entsteht, welcher als ein Block auf eine Leiterplatte aufgesetzt und verlötet werden kann.

Zur Befestigung der Anschlußklemme 1 auf einer Leiterplatte und zur elektrischen Kontaktierung des optoelektronischen Bauelements 5 mit der Leiterplatte weist das optoeletronische Bauelement 5 mehrere Lötstifte 18 auf. Die Lötstifte 18 können - wie in dem hier dargestellten Ausführungsbeispiel - direkt mit dem optoelektronischen Bauelement 5 verbunden sein, insbesondere dann, wenn das optoelektronische Bauelement 5 nicht nur eine Sende- und/oder Empfangseinrichtung aufweist, sondern darüber hinaus zusätzliche elektrische bzw. elektronische Bauelemente enthält. Daneben ist es jedoch auch möglich, die Lötstifte 18 mit einer dem optoelektronischen Bauelement 5 nachgeschalteten Elektronikeinheit zu verbinden. Zur zusätzlichen Befestigung der Anschlußklemme 1 auf der Leiterplatte kann das Gehäuse 4 entsprechende Befestigungsstifte aufweisen, die dann in entsprechende Öffnungen in der Leiterplatte eingesteckt werden. Vorteilhaft ist es jedoch, wenn - wie bei dem hier dargestellten Ausführungsbeispiel - an dem Metallteil 6 Befestigungsstifte 19 zur Befestigung des Metallteils 6 auf der Leiterplatte ausgebildet sind. Durch die Rastverbindung zwischen dem Gehäuse 4 und dem Metallteil 6 wird durch eine Befestigung des Metallteils 6 mit Hilfe der Befestigungsstifte 19 auf der Leiterplatte auch das Gehäuse 4 mit der Leiterplatte mechanisch verbunden. Da die Befestigungsstifte 19 des Metallteils 6 elektrisch leitend sind, können sie nicht nur zur mechanischen Befestigung, sondern zusätzlich zur elektrischen Verbindung des Metallteils 6 mit der Leiterplatte genutzt werden. Werden die Befestigungsstifte 19 mit einer Masseverbindung, beispielsweise einer PE-Leiterbahn der Leiterplatte kontaktiert, so können sie zur Ableitung schädlicher Aufladungen der Kunststoffummantelung des Lichtwellenleiters 2 nach Masse dienen.

In Fig. 1 ist erkennbar, daß das Gehäuse 4 der Anschlußklemme 1 konstruktiv in zwei Kammern, nämlich eine vordere Kammer 20 zur Aufnahme des Metallteils 6 und eine hintere Kammer 21 zur Aufnahme des optoelektronischen Bauelements 5, unterteilt ist. Das optoelektronische Bauelement 5 kann dabei mit Hilfe einer Rastnase 22 in der hinteren Kammer 21 befestigt werden. Schließlich ist in Fig. 4 noch erkennbar, daß als zusätzlicher mechanischer Schutz für den Lichtwellenleiter 2 eine Knickschutzhülle 23 auf das Ansatzelement 15 aufgeschoben ist.

## Patentansprüche

1. Anschlußklemme für mindestens einen Lichtwellenleiter (2), mit einem mindestens eine Öffnung (3) aufweisenden Gehäuse (4), mit einem in dem Gehäuse (4) angeordneten, eine Kontaktfläche aufweisenden Gegenelement, insbesondere einem optoelektronischen Bauelement (5), und mit mindestens einer in dem Gehäuse (4) angeordneten Zugentlastung, wobei im Endzustand die vordere Stirnfläche des Lichtwellenleiters (2) mit der Kontaktfläche des Gegenelements zusammenwirkt und die Zugentlastung ein unbeabsichtigtes Entfernen der Stirnfläche des Lichtwellenleiters (2) von der Kontaktfläche des Gegenelements verhindert,
**dadurch gekennzeichnet,**
**daß** die Zugentlastung als Metallteil (6) ausgebildet ist und zwei seitlich federnde Schenkel (7) aufweist, wobei die Enden (8) der beiden Schenkel (7) in Einführrichtung (E) des Lichtwellenleiters (2) aufeinander zu gebogen sind und die Zugentlastung durch das Einführen des Lichtwellenleiters (2) selbständig aktivierbar ist, und
**daß** sich die Enden (8) der beiden Schenkel (7) berühren, wenn kein Lichtwellenleiters (2) in das Metallteil (6) eingeführt ist.

2. Anschlußklemme nach Anspruch 1, **dadurch gekennzeichnet, daß** in dem Gehäuse (4) mindestens ein Betätigungselement (9) beweglich angeordnet ist und daß das Betätigungselement (9) aus einer ersten Stellung, in der die Enden (8) der beiden Schenkel (7) des Metallteils (6) enger zusammenliegen, in eine zweite Stellung, in der die Enden (8) der beiden Schenkel (7) des Metallteils (6) durch das Betätigungselement (9) auseinandergedrückt sind, verbringbar ist.

3. Anschlußklemme nach Anspruch 2, **dadurch gekennzeichnet, daß** das Betätigungselement (9) von außerhalb des Gehäuses (4) betätigbar ist, insbesondere durch das Einschieben der Spitze eines Schraubendrehers in eine Öffnung (10) im Gehäuse (4) in die zweite Stellung verbringbar ist.

4. Anschlußklemme nach einem der Ansprüche 1 bis 3, **dadurch gekennzeichnet, daß** das Metallteil (6) in dem Gehäuse (4) verrastbar ist.

5. Anschlußklemme nach Anspruch 4, **dadurch gekennzeichnet, daß** die Schenkel (7) des Metallteils (6) Rastausnehmungen (12) aufweisen und im Gehäuse (4) entsprechende Rastnasen (13) ausgebildet sind.

6. Anschlußklemme nach einem der Ansprüche 1 bis 5, **dadurch gekennzeichnet, daß** vor der Kontaktfläche des Gegenelements im Gehäuse (4) ein trichterförmiges Einführelement (14) zur axialen Ausrichtung der vorderen Stirnfläche des Lichtwellenleiters (2) mit der Kontaktfläche des Gegenelements angeordnet ist.

7. Anschlußklemme nach einem der Ansprüche 1 bis 6, **dadurch gekennzeichnet, daß** vor der Öffnung (3) bzw. vor den Öffnungen des Gehäuses (4) je ein rohrförmiges Ansatzelement (15) zum Einführen des Lichtwellenleiters (2) angeordnet ist bzw. sind.

8. Anschlußklemme nach einem der Ansprüche 1 bis 7, **dadurch gekennzeichnet, daß** an dem Gehäuse (4) Rastmittel ausgebildet sind, so daß mehrere Gehäuse (4) zu einem Gehäuseblock verbindbar sind.

9. Anschlußklemme für einen Lichtwellenleiter nach einem der Ansprüche 1 bis 8, mit einem optoelektronischen Bauelement (5), **dadurch gekennzeichnet, daß** dem optoelektronischen Bauelement (5) Lötstifte (18) zur Verbindung mit einer Leiterplatte zugeordnet sind.

10. Anschlußklemme nach Anspruch 9, **dadurch gekennzeichnet, daß** an dem Metallteil (6) mindestens ein Befestigungsstift (19) zur Befestigung des Metallteils (6) auf der Leiterplatte ausgebildet ist, wobei sich der Befestigungsstift (19) im wesentlichen senkrecht zur Einführrichtung (E) des Lichtwellenleiters (2) erstreckt.

11. Anschlußklemme nach Anspruch 10, **dadurch gekennzeichnet, daß** der Befestigungsstift (19) als Lötstift ausgebildet ist und auf der Leiterplatte mit einer Masseverbindung kontaktierbar ist.

12. Anschlußklemme nach einem der Ansprüche 9 bis 11, **dadurch gekennzeichnet, daß** das Gehäuse (4) in Einführrichtung (E) des Lichtwellenleiters (2) in zwei Kammern unterteilt ist, wobei in der vorderen Kammer (21) das Metallteil (6) und in der hinteren Kammer (22) das optoelektronische Bauelement (5) angeordnet ist.

## Claims

1. Connection terminal for at least one optical waveguide (2), with a housing (4) having at least one opening (3), with a mating element arranged in the housing (4) and having a contact pad, in particular an optoelectronic component (5), and with at least one strain-relief means arranged in the housing (4), in the final state the front end face of the optical waveguide (2) interacting with the contact pad of the mating element and the strain-relief means preventing the end face of the optical waveguide (2) from unintentionally moving away from the contact pad of the mating element, **characterized in that** the strain-relief means is in the form of a metal part (6) and has two laterally sprung limbs (7), the ends (8) of the two limbs (7) being bent towards one another in the insertion direction (E) of the optical waveguide (2), and the strain-relief means being capable of being activated independently by means of the insertion of the optical waveguide (2), and **in that** the ends (8) of the two limbs (7) touch one another if no optical waveguide (2) has been inserted into the metal part (6).

2. Connection terminal according to Claim 1, **characterized in that** at least one actuating element (9) is arranged movably in the housing (4), and **in that** the actuating element (9) can be brought from a first position, in which the ends (8) of the two limbs (7) of the metal part (6) lie closer to one another, into a second position, in which the ends (8) of the two limbs (7) of the metal part (6) are pushed apart from one another by the actuating element (9).

3. Connection terminal according to Claim 2, **characterized in that** the actuating element (9) can be actuated from outside the housing (4), in particular can be brought into the second position by the tip of a screwdriver being pushed into an opening (10) in the housing (4).

4. Connection terminal according to one of Claims 1 to 3, **characterized in that** the metal part (6) can be latched in the housing (4).

5. Connection terminal according to Claim 4, **characterized in that** the limbs (7) of the metal part (6) have latching cutouts (12) and corresponding latching tabs (13) are formed in the housing (4).

6. Connection terminal according to one of Claims 1 to 5, **characterized in that** a funnel-shaped insertion element (14) for axially aligning the front end face of the optical waveguide (2) with the contact pad of the mating element is arranged in front of the contact pad of the mating element in the housing (4).

7. Connection terminal according to one of Claims 1 to 6, **characterized in that** in each case one tubular attachment element (15) for inserting the optical waveguide (2) is or are arranged in front of the opening (3) or in front of the openings of the housing (4).

8. Connection terminal according to one of Claims 1 to 7, **characterized in that** latching means are formed on the housing (4) so that a plurality of housings (4) can be connected to form a housing block.

9. Connection terminal for an optical waveguide according to one of Claims 1 to 8, with an optoelectronic component (5), **characterized in that** solder pins (18) for connection to a printed circuit board are assigned to the optoelectronic component (5).

10. Connection terminal according to Claim 9, **characterized in that** at least one fastening pin (19) for fastening the metal part (6) on the printed circuit board is formed on the metal part (6), the fastening pin (19) extending substantially perpendicular to the insertion direction (E) of the optical waveguide (2).

11. Connection terminal according to Claim 10, **characterized in that** the fastening pin (19) is in the form of a solder pin and can make contact with an earth connection on the printed circuit board.

12. Connection terminal according to one of Claims 9 to 11, **characterized in that** the housing (4) is split into two chambers in the insertion direction (E) of the optical waveguide (2), the metal part (6) being arranged in the front chamber (21) and the optoelectronic component (5) being arranged in the rear chamber (22).

## Revendications

1. Borne de raccordement pour au moins une fibre optique (2), comprenant un boîtier (4) présentant au moins une ouverture (3), avec un élément opposé disposé dans le boîtier (4) et présentant une surface de contact, notamment un composant optoélectronique (5), et comprenant au moins un dispositif antitraction disposé dans le boîtier (4), la face frontale avant de la fibre optique (2) en position finale interagissant avec la surface de contact de l'élément opposé et le dispositif antitraction empêchant un retrait involontaire de la face frontale de la fibre optique (2) de la surface de contact de l'élément opposé, **caractérisée en ce que** le dispositif antitraction est réalisé sous la forme d'une pièce métallique (6) et présente deux branches (7) latérales souples, les extrémités (8) des deux branches (7) étant coudées l'une vers l'autre dans le sens de l'introduction (E) de la fibre optique (2) et le dispositif antitraction pouvant être activé automatiquement par l'introduction de la fibre optique (2), et que les extrémités (8) des deux branches (7) se touchent lorsqu'il n'y a pas de fibre optique (2) introduite dans la pièce métallique (6).

2. Borne de raccordement selon la revendication 1, **caractérisée en ce qu'**au moins un élément d'actionnement (9) est disposé dans le boîtier (4) de manière à pouvoir bouger et que l'élément d'actionnement (9) peut être amené d'une première position, dans laquelle les extrémités (8) des deux branches (7) de la pièce métallique (6) sont plus rapprochées, dans une deuxième position dans laquelle les extrémités (8) des deux branches (7) de la pièce métallique (6) sont repoussées l'une de l'autre par l'élément d'actionnement (9).

3. Borne de raccordement selon la revendication 2, **caractérisée en ce que** l'élément d'actionnement (9) peut être actionné depuis l'extérieur du boîtier (4), notamment être amené dans la deuxième position en insérant la pointe d'un tournevis dans une ouverture (10) dans le boîtier (4).

4. Borne de raccordement selon l'une des revendications 1 à 3, **caractérisée en ce que** la pièce métallique (6) peut être enclipsée dans le boîtier (4).

5. Borne de raccordement selon la revendication 4, **caractérisée en ce que** les branches (7) de la pièce métallique (6) présentent des creux d'enclipsage (12) et des tenons d'enclipsage (13) correspondants sont façonnés dans le boîtier (4).

6. Borne de raccordement selon l'une des revendications 1 à 5, **caractérisée en ce qu'**un élément d'introduction (14) en forme d'entonnoir destiné à l'alignement axial de la face frontale de la fibre optique (2) avec la surface de contact de l'élément opposé est disposé avant la surface de contact de l'élément opposé dans le boîtier (4).

7. Borne de raccordement selon l'une des revendications 1 à 6, **caractérisée en ce qu'**un élément d'amorce (15) en forme de tube destiné à l'introduction de la fibre optique (2) est à chaque fois disposé avant l'ouverture (3) ou avant les ouvertures du boîtier (4).

8. Borne de raccordement selon l'une des revendications 1 à 7, **caractérisée en ce que** des moyens d'enclipsage sont façonnés sur le boîtier (4) de sorte que plusieurs boîtiers (4) peuvent être assemblés en un bloc de boîtiers.

9. Borne de raccordement pour une fibre optique selon l'une des revendications 1 à 8, comprenant un composant optoélectronique (5), **caractérisée en ce que** des broches de soudage (18) destinées à la liaison avec un circuit imprimé sont associées au composant optoélectronique (5).

10. Borne de raccordement selon la revendication 9, **caractérisée en ce qu'**au moins une broche de fixation (19) destinée à fixer la pièce métallique (6) sur le circuit imprimé est façonnée sur la pièce métallique (6), la broche de fixation (19) s'étendant pour l'essentiel perpendiculairement au sens d'introduction (E) de la fibre optique (2).

11. Borne de raccordement selon la revendication 10, **caractérisée en ce que** la broche de fixation (19) est réalisée sous la forme d'une broche à souder et peut être mise en contact avec une liaison de masse sur le circuit imprimé.

12. Borne de raccordement selon l'une des revendications 9 à 11, **caractérisée en ce que** le boîtier (4) est divisé en deux chambres dans le sens d'introduction (E) de la fibre optique (2), la pièce métallique (6) étant disposée dans la chambre avant (21) et le composant optoélectronique (5) dans la chambre arrière (22).
